# EUROPEAN PATENT SPECIFICATION

(11) **EP 2 042 714 B1**
(45) Date of publication and mention of the grant of the patent: **07.09.2011**
(21) Application number: 07018762.0
(22) Date of filing: 25.09.2007
(51) Int. Cl.: F02D 41/14, F01N 11/00

(54) **Method for determining the dew point in an exhaust line and apparatus for determinig the dew point in an exhaust line**
Verfahren zur Bestimmung des Taupunkts in einer Abgasstrecke und Vorrichtung zur Bestimmung des Taupunkts in einer Abgasstrecke
Procédé pour déterminer le point de rosée dans une conduite d'évacuation et appareil pour déterminer le point de rosée dans une conduite d'évacuation

(43) Date of publication of application: 01.04.2009
(73) Proprietor: GM Global Technology Operations LLC, Detroit, MI 48265-3000 (US)
(72) Inventor: De Fazio, Tommaso, 10132 Torino (IT); D'Intino, Maura, 10126 Torino (IT); Rovatti, Giovanni, 10023 Chieri (To) (IT)
(74) Representative: Daniel, Ulrich W.P.

(56) References cited:
- DE-A1- 19 928 561
- US-A- 5 616 835
- US-A1- 2005 016 513
- US-A1- 2005 021 214

## Description

The invention relates to a method for determining the dew point in an exhaust line and apparatus for determining the dew point in an exhaust line.

The exhaust of an internal combustion engine contains a percentage of water vapour. Under certain conditions, for example when the engine starts, the exhaust system is cold. Vapour may condense on the inner surface of the exhaust system and condensed water may also be present in the exhaust system even before the engine start due to previous running phases of the engine.

The dew point temperature represents the point, at which both liquid water and vapour are present in the exhaust. At temperatures above the dew point, all exhaust water is condensed to vapour. In internal combustion engine applications, the detection of the dew point in the exhaust line is important to prevent damages to sensors in the exhaust lines. Oxygen sensors in the exhaust line are usually ceramic sensors. When the temperature is below the dew point, the sensor may be partially covered by water cooling mainly the covered part of the sensor. If the temperature in the exhaust increases above the dew point again, the water evaporates. The part being covered by the water changes its temperature differently than the uncovered part. Due to these different temperature shifts, the oxygen sensor may crack due to a thermal shock.

In the EP 1 445 442 B1, the temperature of a catalyst is estimated based on the suction air volume, the fuel injection volume and the ambient temperature or the water temperature. However, as the EP 1 445 442 B1 does not disclose how the dew point in the exhaust is calculated.

US 5,616,835 shows a system for operating a heating element for a ceramic sensor which is arranged in the exhaust channel of an internal combustion machine whereby the critical temperature is calculated. US 2005/0016513 A1 shows a low rotation speed and a low operation region of an internal combustion machine in which the heating of an air-fuel ration sensor by a heater is stopped.

It is accordingly an object of the invention to provide a method for determining a dew point in an exhaust line and to provide an apparatus for determining the dew-point in an exhaust line.

A method is provided for determining the dew-point in an exhaust of an internal combustion engine. A stored value S is compared with a dew point threshold, whereby the stored value is calculated based on the quantity of the injected fuel and on the engine's speed. If the quantity of injected fuel is below a first quantity threshold Q1, the stored value S is decreased.

If the fuel quantity is equal to or higher than a second quantity threshold Q2, S is increased. It is also increased if the fuel quantity is at least as large as the first quantity threshold Q1 and the speed is at least as large as the speed threshold. The method enables a direct estimation of the dew-point in an exhaust independently from the calculating of the temperature in the exhaust. The three modes are based on parameters that are already measured for the engine control and give a algorithm that is easy to implement in an engine controller.

If the dew point threshold (Th_dew) is calibrated depending on the ambient air temperature, the method takes into account that the cooling and heating of the exhaust depends on the ambient air temperature. In a preferred embodiment, the dew point threshold Th_dew comprises a hysteresis to prevent unnecessary switching between the engine control when the thermal conditions are close to the dew-point. The step of calculating S decreases respectively increases by the amount X and X preferably depends on the ambient air temperature because the temperature changes depend on the ambient temperature.

If the engine speed is below a first speed threshold n1 and the quantity of injected fuel is below a second quantity threshold Q2 and equal or larger than the first quantity threshold Q1, it depends, according to an embodiment, on a programmable value if S is increased or decreased. Preferably, this value is programmed such that the value S is increased in case of high ambient air temperatures and decreased in case of low temperatures.

A circuit is also provided for determining the temperature in an exhaust of an internal combustion engine. The circuit, comprises a counter that is built for storing a value S and for changing the value S by an amount X. The amount X is calculated in a threshold determination block based on the quantity of the injected fuel Q and on the engine's speed n. X is negative if *Q< Q*₁ and is positive in the cases *Q*≥*Q*₂ and (*Q*≥*Q*₁ AND *n*≥*n*₁). Q1 is a first quantity threshold, Q2 is a second quantity threshold and n1 is a first speed threshold.

The circuit further comprises a comparator for comparing the stored value S with a dew point threshold. The circuit may be implemented as part of the digital control of a engine controller, for example a microprocessor. The estimation is based just on a few parameters, which are already inputs to modern engine controllers.

The invention will be further described based on the drawings showing an embodiment of the invention.
- Figure 1: shows in a block diagram the method to determine the dew point in an exhaust.
- Figure 2: shows the modes being used for the determination of the dew point in a method according to Figure 1.

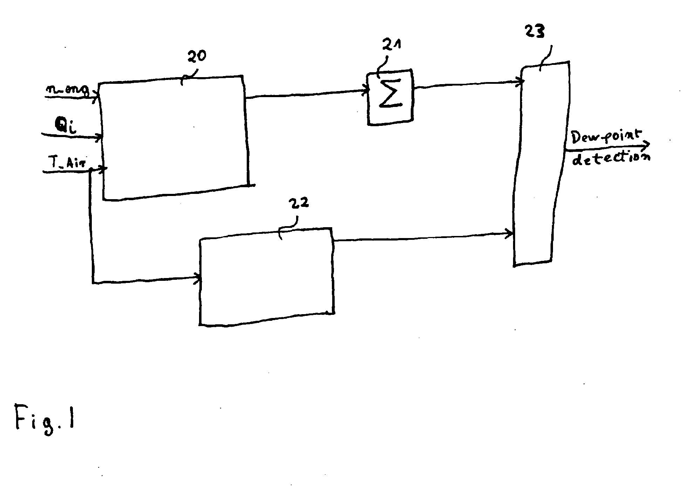

Figure 1 gives an overview of the model to determine the dew point in an exhaust. The block diagram comprises a step determination block 20, a counter 21, a threshold determination 22 and a comparator 23. The signal Q being proportional to the quantity of injected fuel, the signal n_eng proportional to the engine speed and the signal T_Air, which represents the air temperature, are input to the step determination block 20.

According to an embodiment, the ambient temperature is measured in the intake, but any sensor of the vehicle measuring the ambient air temperature may be used. The engine speed and the quantity of injected fuel Q are derived from a rational-speed sensor respectively the engine controller.

For example, a crank angle sensor transmits a pulse being proportional to the rotation speed of the crankshaft. The rational-speed is calculated by calculating the number of pulses in a specified length of time. The volume of injected fuel is derived from the driver's request for torque. This request is translated into a demand for fuel by an engine controller which is used to determine the exhaust.

The output of the step determination block 20 is input to the counter 21, which outputs a count value S to the compare block 22. The dew point threshold determination 22 outputs a threshold temperature value Th_dew, which is compared in the compare block 23 with the output S of the counter 21. The output of the comparator 23 "Dew point detection" is a Boolean value indicating if the dew-point has been detected.

The step determination block 20 defines the size of the steps for the counter 21. At key-on of the vehicle, when the engine starts, the counter 21 is initialised at zero. It has a calibratable lower and upper saturation. The counter starts counting when the engine starts running, i.e. when the internal combustion engine starts. At each calculation task, the counter is incremented by means of a step size X.

If the counter exceeds the dew point threshold Th_dew, then the system is above the dew-point; otherwise, if the counter drops under the threshold Th_dew, the system is below the dew point.

The dew point threshold Th_dew derives from a calibratable vector as a function of the minimum air temperature since the beginning of each trip. In an embodiment, the dew point threshold comprises a hysteris such that the threshold consists of a upper threshold Th_dew_upper and a lower threshold Th_dew_lower. The system is considered to change from the below the dew point mode to the above the dew point mode if the output of the counter exceeds Th_dew_upper. On the other hand, the change in the opposite direction is triggered by the lower the shold Th_dew_lower.

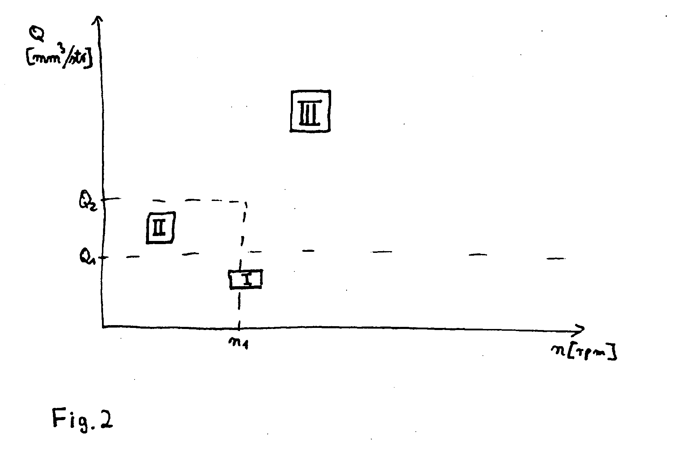

Figure 2 gives an overview how the step size is calculated in the step determination block 20 of Figure 1. The diagram shows the injected fuel quantity in mm³ per stroke over the engine speed in revolutions per minute.

The step size is calculated according to three operation modes. The first operation mode marked with I is cut-off mode in that the fuel quantity is below a first quantity threshold Q1. The level of Q1 may be calibrated as a function of the air temperature.

If the engine is in the cut-off mode, the step size for the counter 21 is negative especially at low temperature because the operating mode tends to bring the system below the dew point. The amount how much the step size decreases is defined by a vector. This vector depends on the temperature and may take into account that, in many vehicles, the exhaust cools off faster at lower than at higher air temperatures. The vector is also calibratable to ensure that the method may be applied to different types of internal combustion engines.

The operating mode idle mode is marked with II. In this mode, the quantity of injected fuel is lower than the second quantity threshold Q2 and higher than or equal to the first quantity threshold Q1. The rotational speed is below the speed threshold n1. The step size X is negative especially at low temperature because the system is brought down below the dew point. At high air temperatures the step size X becomes positive. If X is positive or negative is preferably programmable.

The load mode, which is marked with a III, comprises two regions. In the first one, the fuel quantity Q is equal to or larger than Q2 in one region. In the second region of the load mode, the fuel quantity Q is larger than Q1 and the speed is equal or larger than n1. In this operation mode, the step size is positive because the operating mode tends to bring the system above the dew-point.

The following example shows the typical behaviour of the system. When the engine starts, the system is below the dew point. The counter is initialized and starts counting upwards because the engine is in the load mode. When the counter exceeds the calibratable threshold Th_dew, the system is above the dew point. Sometime it may happen that the system being above the dew point will go below the dew point again. This is for example the case for long fuel cut-offs and long idle conditions. The described method enables the detection of the dew point.

### Reference number list

- 20: step determination block
- 21: counter
- 22: threshold determination
- 23: comparator

## Claims

1. Method for determining the temperature in an exhaust of an internal combustion engine comprising the steps of
- calculating a stored value S based on the quantity of the injected fuel Q and on the engine's speed n, the calculation comprising a step of
- decreasing the stored value S if *Q*<*Q*₁*,*
- increasing the stored value S if *Q*≥*Q*2 OR (*Q*≥*Q*₁ AND *n≥n*₁),
whereby Q1 is a first quantity threshold, Q2 is a second quantity threshold and n1 is a first speed threshold, and Q2 > Q1,
- and comparing the stored value S with a dew point threshold Th_dew.

2. Method according to claim 1,
**characterized in that**
the dew point threshold Th_dew is calibrated depending on the ambient air temperature.

3. Method according to claim 2,
**characterized in that**
the dew point threshold Th_dew comprises a hysteresis.

4. Method according to one of the claims 1 to 3,
**characterized in that**,
if *Q*₁ ≤ *Q* < *Q₂* AND *n* < *n*₁*,* the stored value S is, depending on the ambient air temperature, either increased or decreased.

5. Method according to one of the claims 1 to 4,
**characterized in that**
in the step of calculating the stored value S, S decreases respectively increases by the amount X and X depends on the ambient air temperature.

6. Temperature detection circuit for determining the temperature in an exhaust of an internal combustion engine, comprising
- a counter being built for storing a value S and for changing the value S by an amount X,
- a step determination block (20) being built for calculating the amount X based on the quantity of the injected fuel Q and on the engine's speed n,
whereby X
- is negative if *Q*<*Q*₁,
- is positive if *Q≥Q*₂ OR *(Q≥Q*₁ AND *n≥n*₁*),*
whereby Q1 is a first quantity threshold, Q2 is a second quantity threshold and n1 is a first speed threshold, and Q2 > Q1,
- and a comparator (23) for comparing the stored value S with a dew point threshold (Th_dew).

7. Apparatus according to claim 6,
**characterized in that**
X depends on the ambient air temperature.

8. Apparatus according to one of the claims 6 to 7, **characterized in that**
the apparatus is part of a control of an internal combustion engine.

9. Apparatus according to claim 8,
**characterized in that**
the internal combustion engine is part of an automobile.

10. Apparatus according to one of the claims 6 to 9,
**characterized in that**
, if Q₁ ≤ *Q*<*Q*₂ AND *n*<*n*₁*,* the stored value S is increased or decreased depending on the ambient air temperature.

## Patentansprüche

1. Verfahren zum Bestimmen der Temperatur in einem Auspuff eines Verbrennungsmotors, umfassend die folgenden Schritte:
- Berechnen eines gespeicherten Werts S auf der Basis der Menge des eingespritzten Kraftstoffs Q und der Geschwindigkeit des Motors n, wobei die Berechnung den folgenden Schritt umfasst:
- Vermindern des gespeicherten Werts S, wenn Q < *Q₁,*
- Erhöhen des gespeicherten Werts S, wenn Q ≥ Q*₂* ODER (Q ≥ *Q₁* UND *n ≥ n₁) ,*
wobei Q₁ eine erste Mengenschwelle ist, Q₂ eine zweite Mengenschwelle ist, n₁ eine erste Geschwindigkeitsschwelle ist und Q₂ > Q₁,
- und Vergleichen des gespeicherten Werts S mit einer Taupunktschwelle Th_dew.

2. Verfahren nach Anspruch 1,
**dadurch gekennzeichnet, dass**
die Taupunktschwelle Th_dew in Abhängigkeit von der Umgebungslufttemperatur kalibriert wird.

3. Verfahren nach Anspruch 2,
**dadurch gekennzeichnet, dass**
die Taupunktschwelle Th_dew eine Hysterese umfasst.

4. Verfahren nach einem der Ansprüche 1 bis 3,
**dadurch gekennzeichnet, dass**
*wenn Q₁ ≤* Q < Q*₂ UND n* < *n₁*, der gespeicherte Wert S in Abhängigkeit von der Umgebungslufttemperatur entweder vermindert oder erhöht wird.

5. Verfahren nach einem der Ansprüche 1 bis 4,
**dadurch gekennzeichnet, dass**
beim Schritt des Berechnens des gespeicherten Werts S S um den Betrag X sinkt bzw. steigt und X von der Umgebungslufttemperatur abhängt.

6. Temperaturerkennungs-Schaltkreis zum Bestimmen der Temperatur in einem Auspuff eines Verbrennungsmotors, umfassend
- einen Zähler, der vorgesehen ist, um einen Wert S zu speichern und den Wert S um einen Betrag X zu verändern,
- einen Schrittbestimmungsblock (20), der vorgesehen ist, um den Betrag X auf der Basis der Menge des eingespritzten Kraftstoffs Q und der Geschwindigkeit des Motors n zu berechnen,
wobei X
- negativ ist, wenn Q < Q₁,
- positiv ist, wenn Q ≥ Q₂ ODER (*Q₂* ≥ *Q₁* UND *n* ≥ *n₁*), wobei Q₁ eine erste Mengenschwelle ist, Q₂ eine zweite Mengenschwelle ist, n₁ eine erste Geschwindigkeitsschwelle ist und Q₂ > Q₁,
- und einen Komparator (23) zum Vergleichen des gespeicherten Werts S mit einer Taupunktschwelle (Th_dew).

7. Vorrichtung nach Anspruch 6,
**dadurch gekennzeichnet, dass**
X von der Umgebungslufttemperatur abhängt.

8. Vorrichtung nach einem der Ansprüche 6 bis 7,
**dadurch gekennzeichnet, dass**
die Vorrichtung Teil einer Steuerung eines Verbrennungsmotors ist.

9. Vorrichtung nach Anspruch 8,
**dadurch gekennzeichnet, dass**
der Verbrennungsmotor Teil eines Kraftfahrzeugs ist.

10. Vorrichtung nach einem der Ansprüche 6 bis 9,
**dadurch gekennzeichnet, dass**
wenn Q₁ ≤ Q < Q₂ UND n < n₁, der gespeicherte Wert S in Abhängigkeit von der Umgebungslufttemperatur erhöht oder vermindert wird.

## Revendications

1. Procédé pour déterminer la température d'un moteur à combustion interne, comprenant les étapes de :
- calcul d'une valeur enregistrée S en fonction de la quantité de carburant injectée Q et du régime du moteur n, le calcul comprenant une étape de
- réduction de la valeur enregistrée S si Q < *Q₁,*
- augmentation de la valeur enregistrée S if Q ≥ *Q₁* OU (*Q₂* ≥ *Q₁* ET *n* ≥ *n₁*),
*Q₁* étant un premier seuil de quantité, Q₂ un deuxième seuil de quantité et n₁ un premier seuil de vitesse, avec Q₂ > *Q₁,*
- et comparaison de la valeur enregistrée S avec un seuil de point de rosée Th_dew.

2. Procédé selon la revendication 1, **caractérisé en ce que** le seuil de point de rosée Th_dew est étalonné en fonction de la température de l'air ambiant.

3. Procédé selon la revendication 2, **caractérisé en ce que** le seuil de point de rosée Th_dew possède une hystérésis.

4. Procédé selon l'une des revendications 1 à 3, **caractérisé en ce que** si *Q₁ ≤ Q* < Q₂ ET *n* < *n₁,* la valeur enregistrée S est soit augmentée, soit réduite en fonction de la température de l'air ambiant.

5. Procédé selon l'une des revendications 1 à 4, **caractérisé en ce que** dans l'étape de calcul de la valeur enregistrée *S, S* diminue ou augmente de la grandeur X et X dépend de la température de l'air ambiant.

6. Circuit de détection de la température pour déterminer la température d'un échappement d'un moteur à combustion interne, comprenant :
- un compteur conçu pour enregistrer une valeur S et modifier la valeur S d'une grandeur *X*,
- un premier bloc de détermination (20) conçu pour calculer la grandeur *X* en fonction de la quantité de carburant injecté Q et de la vitesse du moteur n,
*X* étant
- négatif si *Q* < *Q₁,*
- positif si *Q* ≥ *Q*₂ OU *(Q ≥ Q₁* ET *n* ≥ *n₁) ,*
Q1 étant un premier seuil de quantité, Q2 un deuxième seuil de quantité et n1 un premier seuil de vitesse, avec Q2 > Q1,
- et un comparateur (23) pour comparer la valeur enregistrée S avec un seuil de point de rosée (Th_dew).

7. Appareil selon la revendication 6, **caractérisé en ce que** *X* dépend de la température de l'air ambiant.

8. Appareil selon l'une des revendications 6 à 7, **caractérisé en ce que** l'appareil fait partie d'une régulation d'un moteur à combustion interne.

9. Appareil selon la revendication 8, **caractérisé en ce que** le moteur à combustion interne fait partie d'une automobile.

10. Appareil selon l'une des revendications 6 à 9, **caractérisé en ce que** si *Q*₁ ≤ *Q* < *Q*₂ *ET n* < *n₁,* la valeur enregistrée S est augmentée ou réduite en fonction de la température de l'air ambiant.
